# EUROPEAN PATENT SPECIFICATION

(11) **EP 0 607 100 B1**
(45) Date of publication and mention of the grant of the patent: **03.06.1998**
(21) Application number: 94600001.5
(22) Date of filing: 11.01.1994
(51) Int. Cl.: B01D 53/00

(54) **Filter for combustion fumes**
Verbrennungsgasfilter
Filtre pour gaz résiduels de combustion

(30) Priority: 14.01.1993 GR 93010001
(43) Date of publication of application: 20.07.1994
(73) Proprietor: FOUKAKIS, Georgios, GR-700 06 Heraklion (GR)
(72) Inventor: FOUKAKIS, Georgios, GR-700 06 Heraklion (GR)

(56) References cited:
- EP-A- 0 442 078
- FR-A- 2 390 981

## Description

EP-A-0442078 discloses a washing tower for waste gas treatment in which the gases are contacted with a finely distributed washing fluid comprising at least two phases. Apart from water, the washing fluid comprises a surfactant of controlled lather and an oily liquid. The washing fluid laden with the gas impurities is collected at the bottom of the tower and is led to a separation or purification stage. The purified washing fluid is recycled back to the tower.

The present invention is defined by the independent claims, with particular embodiments according to the subclaims.

Within the combustion fumes filter, according to a preferred embodiment, all natural cleaning processes of the polluted gases, which are a product of the combustion of liquid and solid fuels, such as diesel, coal etc. take place artificially.

These fumes are admitted into the filter through an adjustable electrical turbine. Right behind the turbine there is an electric resistance on which drops of water fall which turn instantly into steam. The steam mingles with the fumes so that with the subsequently created water vapour cloud the dissolution of the pollutants is easier to achieve within the filter.

The technique applied on the filter is the following:

Within the filter multiple injections of water take place constantly to create a water vapour cloud. A special liquid detergent is added with controlled lather. There are special arched diaphragms inside the filter so that the gases follow a spiral flow to achieve an even better result of cleaning by the water vapour cloud. The water vapour cloud is produced by means of a pressure pump. The detergent is added in regular periods by time-switch. The filter is fully automated, i.e. the starting of the turbine, the starting of the water pressure pump, of the detergent pump and of the electric resistance take place automatically. The filter is turned on before the gas-producing installations to prevent the leak of any non-filtered fumes and it stops two or three minutes after the stopping of the installations which produce fumes.

The filter is completely made of stainless metal and it can replace all plain filters existing today. It can be applied in industry, manufacture, shipping, heavy machinery, trucks and busses and on any other unit which is combusting liquid or solid fuel.

The dimensions can be adjusted or more than one filters can be used to cover the needs of the installation in question.

The pollutants which are held back within the filter are swept away by the water and deposit on the lower part of the filter. Subsequently they will be lead to a sedimentation basin where the injection water will be coming from as well. The sewage can be collected by the cleaning valves and can be used as an additive to asphalt at the first asphalt layer of the roads. Thus there will be no environmental pollution from liquid waste.

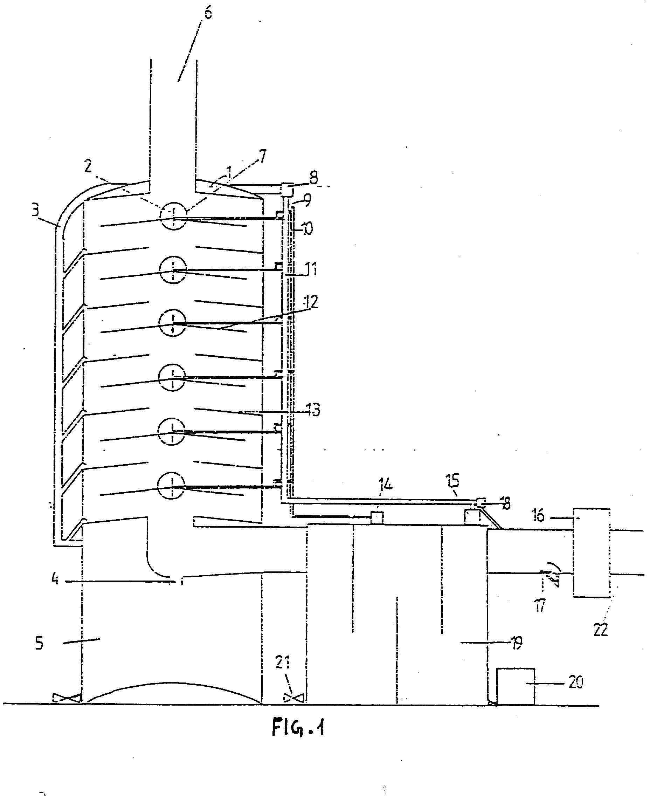

### List of reference signs in Fig. 1

- 1.: Body of filter
- 2.: Nozzle for the creation of the water vapour cloud
- 3.: Main liquid waste pipe
- 4.: Liquid waste outlet
- 5.: Water sedimentation basin A
- 6.: Gas outlet
- 7.: Adjustment - Cleaning opening
- 8.: Pressure adjustment valve
- 9.: Detergent valve
- 10.: Detergent pipe
- 11.: Pressure pipe
- 12.: Intermediate arched diaphragm
- 13.: Fixed arched diaphragm
- 14.: Detergent pump
- 15.: Water pressure pump
- 16.: Turbine
- 17.: Electrical resistance
- 18.: Drop-producing valve
- 19.: Water sedimentation basin B
- 20.: Check panel
- 21.: Cleaning valve
- 22.: Fumes inlet

## Claims

1. A filter for cleaning combustion fumes comprising a main body (1), polluted gas inlet (22) and cleaned gas outlet (6), an electrical turbine (5) for admitting the fumes into the main body; means (9,10,14) for adding liquid detergent having a controlled lather to dissolve the fume pollutants; nozzles (2) for injecting water to create a water cloud within the main body; a pressure pump (15) for recycling cleaning water to the injection nozzles from waste water sedimentation tanks (5) and (19), which are located on the lower part of the filter; characterised by:
within the main body, fixed arched diaphragms (13) for collecting and removing liquid waste and intermediate arched diaphragms (12) for causing the fumes to follow a spiral upward flow and
a water drop-producing valve (18) and an electrical resistance (17) for turning the produced water drops into steam located in the gas inlet, downstream of the turbine, so that the incoming fume molecules are charged with steam, for the better dissolution of fumes within the filter.

2. A filter according to claim 1, characterised in that said means for adding detergent comprises a separate detergent pump (14) and a time-switch for adding the detergent at regular periods.

3. A filter according to claim 2, characterised in that the filter is fully automated.

4. A filter according to any of the preceding claims, characterised by cleaning valves (21) for collecting the sediment from the sedimentation tanks.

5. A method for cleaning combustion fumes comprising:
admitting the fumes into the main body (1) of a filter by the use of an electrical turbine (5);
injecting cleaning water and liquid detergent having a controlled lather within the main body to dissolve the fume pollutants through nozzles (2) to create a water vapour cloud within the main body;
recycling cleaning water to the injection nozzles from waste water sedimentation tanks (5) and (19) located on the lower part of the filter by a pressure pump (15); characterised by:
causing the fumes to follow a spiral upward flow by the use of fixed arched diaphragms (13) and intermediate arched diaphragms (12) within the main body and producing water drops which fall on an electrical resistance (17) for turning the produced water drops into steam, downstream of the turbine, so that the incoming fume molecules are charged with steam, for the better dissolution of fumes within the filter.

6. A method according to claim 5, characterised in that detergent is added at regular periods by the use of a time-switch.

7. A method according to claim 6, characterised in that the filter is fully automated and is turned on before the gas-producing installations to prevent the leak of any non-filtered fumes and it stops two or three minutes after the stopping of the installations which produce fumes.

## Patentansprüche

1. Ein Filter für die Reinigung von Verbrennungsabgasen, der aus einem Hauptteil besteht. (1), aus einem Einlaß für die verschmutzten Gase (22), und einen Auslaß für das gereinigte Gas (6), eine elektrische Turbine (5) für die Einführung der Gase in den Hauptteil, Mittel ( 9,10,14 ) um das flüßige Reinigungsmittel einzuführen, das einen kontrollierten Schaum produziert, um die Gasverunreiniger aufzulösen, Düsen (2) um Wasser einzuspritzen, daß eine Wasserwolke innerhalb des Hauptteils entsteht, eine Druckpumpe (15), um das Reinigungswasser zurück zu den Einspritzungsdüsen aus den Ablagerungsbehältern für das Abwasser kommen zu lassen (5) und (19), welche sich im unteren Teil des Filters befinden, gekennzeichnet von innerhalb des Hauptteils fest montierter gewölbter Diaphragme (13), um Abwässer zu sammeln und zu entfernen und dazwischen geschaltete gewölbte Diaphragmen (12), um die Gase ein spiralförmiges aufwärts Strömen verfolgen zu lassen und ein Wassertropfen produzierendes Ventil (18) und einen elektrischen Widerstand (17), um die produzierten Wassertropfen in Dampf zu verwandeln, der sich bei der Gaseinfuhr befindet, im abwärtigen Fluß der Turbine, so daß die hineinströmenden Gasmoleküle mit Dampf beladen werden, für eine bessere Auflösung der Abgase innerhalb des Filters.

2. Einen Filter gemäß dem Anspruch 1, gekennzeichnet von diesem erwähnten Mittel für die Zufuhr des Reinigungsmittels beinhaltet eine separate Reinigungsmittelpumpe (14) und einen Zeitschalter um das Reinigungsmittel in regelmäßigen Zeitabständen zu verabreichen.

3. Einen Filter gemäß Anspruch 2, gekennzeichnet von seiner vollen Automatisierung.

4. Einen Filter gemäß jeder der vorher erwähnten Ansprüchen, gekennzeichnet von Reinigungsventilen (21), um die Ablagerungen aus den Ablagerungsbehältern zu sammeln.

5. Eine Methode für die Reinigung von Abgasen, die aus folgendem besteht:
die Gase in den Hauptteil (1) eines Filters mit dem Gebrauch einer elektrischen Turbine (5) einzuführen, Reinigungswasser und flüßiges Reinigungsmittel, das einen kontrollierten Schaum aufweist, in den Hauptteil einzuspritzen, um die Gasverunreiniger aufzulösen, durch Düsen (2), um eine Wasserdampfwolke innerhalb des Hauptteils zu produzieren, Wiederverwertung des Reinigungswassers zurück zu den Einspritzungsdüsen aus den Abwässerablagerunsbehältern (5) und (19), die sich im unteren Teil des Filters mittels einer Druckpumpe (15) befinden. Der Filter ist gekennzeichnet von: Er macht, daß die Gase einen spiralförmigen aufwärts Fluß durch den Gebrauch von angebrachten gewölbten Diaphragmen (13) verfolgen, und dazwischen geschalteten gewölbten Diaphragmen (12) innerhalb des Hauptteiles, durch Einspritzungsdüsen die Wassertropfen einführen, die auf einen elektrischen Widerstand fallen (17), um die produzierten Wassertropfen in Dampf zu verwandeln im Abwärtsfluß der Turbine, so daß die hereinkommenden Gasmoleküle mit Dampf, für eine bessere Auflösung der Gase innerhalb des Filters beladen werden.

6. Eine Methode gemäß Anspruch 5, gekennzeichnet davon, daß das Reinigungsmittel in regelmäßigen Abständen durch den Gebrauch eines Zeitschalters verabreicht wird.

7. Eine Methode gemäß Anspruch 6, gekennzeichnet davon, daß der Filter vollautomatisiert ist und vor dem Einschalten der abgasenproduzierenden Anlagen eingeschalten wird, um ein Ausweichen von ungefilterten Gasen zu vermeiden und er wird zwei oder drei Minuten nach dem Stillstand der abgasenproduzierenden Anlagen ausgeschaltet.

## Revendications

1. Le filtre d' épuration des fumées de combustion comprend le corps principal (1), l' entrée du gaz pollué (22), la sortie du gaz purifié (6), une turbine éléctrique (5) pour introduire les fumées dans le corps principal; moyens pour ajouter du liquide détérgent et avoir une mousse controlée pour la dissolution des fumées polluantes; embouchures pour les injections d' eau qui créent un nuage de vapeur dans le corps central; une pompe de pression (15) pour retourner l' eau d' épuration, par les bassins d' affaissement, qui se trouvent au fond du filtre, aux emboucures d' injection (5).
Le filtre se caracterise par: les diaphragmes arcadés solides qui collectionnent et déplacent les rejets liquides, les diaphragmes arcadés intermediaires, qui obligent les fumées de suivre une route spirale, une vanne qui produit les gouttes d' eau et une resistance éléctrique qui transforme les gouttes d' eau a vapeur pour une dissolution des fumées plus facile.

2. Le filtre, selon la pretention 1 est caractérisé par lé fait que, les moyens utilisés pour ajouter du détérgent comprennent une pompe de détérgent separée et un interrupteur de temps pour que le détérgent se mette en periodes regulieres.

3. Le filtre,selon la prétention 2, est caracterisé par le fait que le filtre est complétement automatique.

4. Le filtre,selon le pretentions précédentes est caracterisé par les vannes d' épuration qui servent à collectionner l' affaissement par les baisins d' affaissement.

5. La méthode pour l' épuration des fumées de combustion comprend:l' addition des fumées au corps principal par un filtre avec l' usage d' une turbine éléctique (5);l' injection d' eau et de liquide détérgent, avec une mousse controlée dans le corps principal pour dissoudre les fumées polluantes;le retour de l' eau d' épuration aux embouchures d' injection par les bassins d' affaissement qui se met au fond du filtre par une pompe de pression, qui oblige les fumées de suivre une route spirale avec l' usage des diaphragmes arcadés solides et intermediaires dans le corps et produit des gouttes d' eau qui tombent sur une résistance éléctrique et transforme les gouttes d' eau à vapeur, pour que les fumées polluantes se dissolvent mieux dans le filtre.

6. La méthode,selon la pretention 5,est caractérisée par le fait que le détérgent est ajoute en periodes régulieres avec l' usagé d' un intérupteur de temps.

7. La méthode,selon la prétention 6 est caracterisée par le fait que le filtre est complétement qutomatique et commence à fonctionner avant les installations qui produisent du gaz pour prevenir l' écoulement des fumées pas filtrees, et arrête ou trois minutes aprés l' arrêt des installations qui produisent des fumées.
